# EUROPEAN PATENT APPLICATION

(11) **EP 4 614 908 A1**
(43) Date of publication of application: **10.09.2025**
(21) Application number: 22964154.3
(22) Date of filing: 06.11.2022
(51) Int. Cl.: H04L 27/00, H04W 74/00

(54) **UPLINK COVERAGE ENHANCEMENT METHOD AND APPARATUS, AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/130181
(87) International publication number: WO 2024/092853

(57) **Abstract**

The present disclosure relates to an uplink coverage enhancement method and apparatus, and a storage medium. The uplink coverage enhancement method is applied to a terminal. The method comprises: sending repetition instruction information to a network device, wherein the repetition instruction information is used for instructing a terminal to perform repetition of uplink control information on a common physical uplink control channel resource; on the basis of a repetition instruction sent by the network device, determining the number of times that the uplink control information is sent on the common physical uplink control channel resource; and according to the determined number of times, sending the uplink control information on the common physical uplink control channel resource. By means of the present disclosure, sending of uplink control information on a common physical uplink control channel resource can be performed according to the determined number of times, implementing coverage enhancement of the common physical uplink control channel.

## Description

### TECHNICAL FIELD

The present disclosure relates to a field of communication technologies, in particular, to an uplink coverage enhancement method, an uplink coverage enhancement apparatus, and a storage medium.

### BACKGROUND

Non-terrestrial network (NTN) technology has been introduced with the development of communication technology.

In the NTN, due to a long distance between a satellite/air equipment and a ground user equipment (UE), a path loss of information transmission is large, resulting in limited coverage of some channels. It is necessary to enhance uplink control information, for example, enhance uplink control information transmitted/received on a common physical uplink control channel resource, such as message4 (Msg4) hybrid automatic repeat request acknowledgment (HARQ-ACK) feedback, to meet a channel coverage requirement.

### SUMMARY

To overcome the problems existing in the related art, the present disclosure provides an uplink coverage enhancement method, an uplink coverage enhancement apparatus, and a storage medium.

According to a first aspect of embodiments of the present disclosure, there is provided an uplink coverage enhancement method, performed by a terminal. The method includes:
sending repetition indication information to a network device, in which, the repetition indication information is configured to indicate repetition of uplink control information on a common physical uplink control channel resource by the terminal;
determining, based on a repetition indication sent by the network device, the number of times to send the uplink control information on the common physical uplink control channel resource; and
sending the uplink control information on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on message3, and the message3 includes an information field for indicating the repetition indication information;
in which, the information field includes a single bit; and
the single bit is configured to indicate the repetition indication information and/or a repetition number in a single repetition number group; or,
the information field includes a plurality of bits; and
the plurality of bits are configured to indicate a first repetition number, in which, the first repetition number is a repetition number reported by the terminal to the network device;
in which, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
in response to the first signaling being configured with repetition number information, the repetition number information including an enable repetition number and/or a validity repetition number, and the enable repetition number and/or the validity repetition number including a single repetition number, a second repetition number is determined based on the first signaling, the second repetition number is a repetition number of performing the uplink control information repetition by the terminal on the common physical uplink control channel resource;
in response to the first signaling being configured with the repetition number information, the repetition number information including a disable repetition number and/or an invalidity repetition number, the number of times to send the uplink control information on the common physical uplink control channel resource is determined as a single transmission based on the first signaling;
in response to the first signaling being configured with the repetition number information, the repetition number information including the enable repetition number and/or the validity repetition number, and the enable repetition number and/or the validity repetition number including a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
in response to the first signaling not being configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes downlink control signaling (DCI) of the network device scheduling message4, or the second signaling includes a media access control (MAC) control element (CE) in a physical downlink control channel (PDSCH) carrying message4.

In an implementation, in response to the second signaling including the DCI of the network device scheduling message4, at least one information field included in the second signaling is an information field corresponding to most significant X bits in a modulation and coding scheme (MCS) field, where X is a positive integer.

In an implementation, the first signaling is a radio resource control (RRC) signaling.

In an implementation, before sending the repetition indication information to the network device, the method further includes:
determining that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or message3;
receiving indication information for indicating a single transmission sent by the network device.

In an implementation, the uplink control information includes a message4 hybrid automatic repeat request acknowledgement (Msg4 HARQ-ACK) message.

According to a second aspect of embodiments of the present disclosure, there is provided an uplink coverage enhancement method, performed by a network device. The method includes:
receiving repetition indication information sent by a terminal, in which, the repetition indication information is configured to indicate repetition of uplink control information on a common physical uplink control channel resource by the terminal;
sending a repetition indication to the terminal, in which, the repetition indication is used to instruct the terminal to determine the number of times to send the uplink control information on the common physical uplink control channel resource by the terminal; and
receiving the uplink control information sent by the terminal on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on message3, and the message3 includes an information field for indicating the repetition indication information;
in which, the information field includes a single bit; and the single bit is configured to indicate the repetition indication information and/or a repetition number in a single repetition number group; or,
the information field includes a plurality of bits; and the plurality of bits are configured to indicate a first repetition number, in which, the first repetition number is a repetition number received by the network device from the terminal;
in which,, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
the first signaling is configured with repetition number information, the repetition number information includes an enable repetition number and/or a validity repetition number, and the enable repetition number and/or the validity repetition number include a single repetition number, a second repetition number is determined based on the first signaling, the second repetition number is a repetition number of performing the uplink control information repetition by the terminal on the common physical uplink control channel resource;
the first signaling is configured with the repetition number information, the repetition number information includes a disable repetition number and/or an invalidity repetition number, the number of times to send the uplink control information on the common physical uplink control channel resource is determined to be a single transmission based on the first signaling;
the first signaling is configured with the repetition number information, the repetition number information includes the enable repetition number and/or the validity repetition number, and the enable repetition number and/or the validity repetition number include a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
the first signaling is not configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes downlink control signaling (DCI) of the network device scheduling message4, or the second signaling includes a media access control (MAC) control element (CE) in a physical downlink control channel (PDSCH) carrying message4.

In an implementation, the second signaling includes the DCI of the network device scheduling message4, at least one information field included in the second signaling is an information field corresponding to most significant X bits in a modulation and coding scheme (MCS) field, where X is a positive integer.

In an implementation, the first signaling is a radio resource control (RRC) signaling.

In an implementation, before receiving the repetition indication information sent by the terminal, the method further includes:
determining that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or message3;
the network device sending indication information for indicating a single transmission.

In an implementation, the uplink control information includes a message4 hybrid automatic repeat request acknowledgement (Msg4 HARQ-ACK) message.

According to a third aspect of embodiments of the present disclosure, there is provided an uplink coverage enhancement apparatus, configured for a terminal. The apparatus includes:
a sending unit, configured to send repetition indication information to a network device, in which, the repetition indication information is configured to indicate repetition of uplink control information on a common physical uplink control channel resource by the terminal; and
an indication unit, configured to determine, based on a repetition indication sent by the network device, the number of times to send the uplink control information on the common physical uplink control channel resource;
the indicating unit being further configured to send the uplink control information on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on message3, and the message3 includes an information field for indicating the repetition indication information;
in which, the information field includes a single bit; and
the single bit is configured to indicate the repetition indication information and/or a repetition number in a single repetition number group; or,
the information field includes a plurality of bits; and
the plurality of bits are configured to indicate a first repetition number, in which, the first repetition number is a repetition number reported by the terminal to the network device;
in which, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
in response to the first signaling being configured with repetition number information, the repetition number information including an enable repetition number and/or a validity repetition number, and the enable repetition number and/or the validity repetition number including a single repetition number, a second repetition number is determined based on the first signaling, the second repetition number is a repetition number of performing the uplink control information repetition by the terminal on the common physical uplink control channel resource;
in response to the first signaling being configured with the repetition number information, the repetition number information including a disable repetition number and/or an invalidity repetition number, the number of times to send the uplink control information on the common physical uplink control channel resource is determined as a single transmission based on the first signaling;
in response to the first signaling being configured with the repetition number information, the repetition number information including the enable repetition number and/or the validity repetition number, and the enable repetition number and/or the validity repetition number including a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
in response to the first signaling not being configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes downlink control signaling (DCI) of the network device scheduling message4, or the second signaling includes a media access control (MAC) control element (CE) in a physical downlink control channel (PDSCH) carrying message4.

In an implementation, in response to the second signaling including the DCI of the network device scheduling message4, at least one information field included in the second signaling is an information field corresponding to most significant X bits in a modulation and coding scheme (MCS) field, where X is a positive integer.

In an implementation, the first signaling is a radio resource control (RRC) signaling.

In an implementation, before sending the repetition indication information to the network device, the apparatus further includes:
a determination unit, configured to determine that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or message3;
receiving indication information for indicating a single transmission sent by the network device.

In an implementation, the uplink control information includes a message4 hybrid automatic repeat request acknowledgement (Msg4 HARQ-ACK) message.

According to a fourth aspect of embodiments of the present disclosure, there is provided an uplink coverage enhancement apparatus, configured for a network device. The apparatus includes:
a receiving unit, configured to receive repetition indication information sent by a terminal, in which, the repetition indication information is configured to indicate repetition of uplink control information on a common physical uplink control channel resource by the terminal; and
a control unit, configured to send a repetition indication to the terminal, in which, the repetition indication is used to instruct the terminal to determine the number of times to send the uplink control information on the common physical uplink control channel resource by the terminal;
the control unit being further configured to receive the uplink control information sent by the terminal on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on message3, and the message3 includes an information field for indicating the repetition indication information;
in which, the information field includes a single bit; and
the single bit is configured to indicate the repetition indication information and/or a repetition number in a single repetition number group; or,
the information field includes a plurality of bits; and
the plurality of bits are configured to indicate a first repetition number, in which, the first repetition number is a repetition number received by the network device from the terminal;
in which,, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
the first signaling is configured with repetition number information, the repetition number information includes an enable repetition number and/or a validity repetition number, and the enable repetition number and/or the validity repetition number include a single repetition number, a second repetition number is determined based on the first signaling, the second repetition number is a repetition number of performing the uplink control information repetition by the terminal on the common physical uplink control channel resource;
the first signaling is configured with the repetition number information, the repetition number information includes a disable repetition number and/or an invalidity repetition number, the number of times to send the uplink control information on the common physical uplink control channel resource is determined to be a single transmission based on the first signaling;
the first signaling is configured with the repetition number information, the repetition number information includes the enable repetition number and/or the validity repetition number, and the enable repetition number and/or the validity repetition number include a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
the first signaling is not configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes downlink control signaling (DCI) of the network device scheduling message4, or the second signaling includes a media access control (MAC) control element (CE) in a physical downlink control channel (PDSCH) carrying message4.

In an implementation, the second signaling includes the DCI of the network device scheduling message4, at least one information field included in the second signaling is an information field corresponding to most significant X bits in a modulation and coding scheme (MCS) field, where X is a positive integer.

In an implementation, the first signaling is a radio resource control (RRC) signaling.

In an implementation, before receiving the repetition indication information sent by the terminal, the apparatus further includes:
a determination unit, configured to determine that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or message3;
the network device sending indication information for indicating a single transmission.

In an implementation, the uplink control information includes a message4 hybrid automatic repeat request acknowledgement (Msg4 HARQ-ACK) message.

According to a fifth aspect of embodiments of present disclosure, an uplink coverage enhancement apparatus is provided. The apparatus includes: a processor; and a memory for storing instructions executable by the processor; in which, the processor is configured to perform the method in the first aspect or in any one implementation of the first aspect.

According to a sixth aspect of embodiments of the present disclosure, an uplink coverage enhancement apparatus is provided. The apparatus includes: a processor; and a memory for storing instructions executable by the processor; in which, the processor is configured to perform the method in the second aspect or any one implementation of the second aspect.

According to a seventh aspect of embodiments of the present disclosure, a non-temporary computer-readable storage medium is provided. When instructions in the storage medium are executed by a processor of a terminal, the terminal is caused to perform the method in the first aspect or any implementation of the first aspect.

According to an eighth aspect of embodiments of the present disclosure, a non-temporary computer-readable storage medium is provided. When instructions in the storage medium are executed by a processor of a network device, the network device is caused to perform the method in the second aspect or any implementation of the second aspect.

The technical solution provided in embodiments of the present disclosure may include the following beneficial effects. The terminal sends the repetition indication information to the network device, to indicate the repetition of the uplink control information on the common physical uplink control channel resource by the terminal. The terminal determines the number of times to send the uplink control information on the common physical uplink control channel resource, based on the repetition indication sent by the network device, and sends the uplink control information on the common physical uplink control channel resource according to the determined number of times. Therefore, sending the uplink control information may be implemented according to the determined number of times on the common physical uplink control channel resource, and coverage enhancement can be performed on the common physical uplink control channel.

It should be noted that, the general description above and the detailed description in the following are illustrative and explanatory, and do not constitute the limitation on the present disclosure.

### BRIEF DESCRIPTION OF THE DRAWINGS

The accompanying drawings herein are incorporated into the specification and constitute a part of the specification, illustrate embodiments in conformity with embodiments of the present disclosure, and explain the principle of the present disclosure together with the specification.
FIG. 1 is a schematic diagram illustrating a wireless communication system according to an embodiment.
FIG. 2 is a flowchart illustrating an uplink coverage enhancement method according to an embodiment.
FIG. 3 is a flowchart illustrating an uplink coverage enhancement method according to an embodiment.
FIG. 4 is a flowchart illustrating an uplink coverage enhancement method according to an embodiment.
FIG. 5 is a flowchart illustrating an uplink coverage enhancement method according to an embodiment.
FIG. 6 is a flowchart illustrating an uplink coverage enhancement method according to an embodiment.
FIG. 7 is a flowchart illustrating an uplink coverage enhancement method according to an embodiment.
FIG. 8 is a block diagram illustrating an uplink coverage enhancement apparatus according to an embodiment.
FIG. 9 is a block diagram illustrating an uplink coverage enhancement apparatus according to an embodiment.
FIG. 10 is a block diagram illustrating a device for uplink coverage enhancement according to an embodiment.
FIG. 11 is a block diagram illustrating a device according to an embodiment.

### DETAILED DESCRIPTION

The embodiments will be described in detail here, and examples thereof are shown in the accompanying drawings. When the following descriptions refer to the accompanying drawings, same numbers in different drawings represent same or similar elements unless otherwise indicated. The implementations described in the following embodiments do not represent all implementations consistent with the present disclosure.

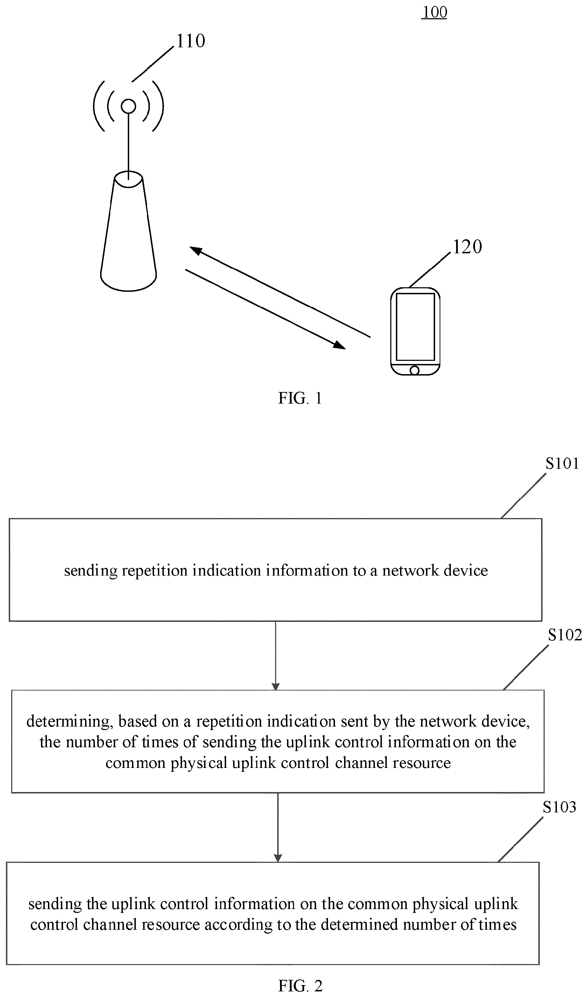

An access method in embodiments of the present disclosure is applicable for a wireless communication system 100 as illustrated in FIG. 1. As illustrated in FIG. 1, the wireless communication system 100 includes a network device 110 and a terminal 120. The network device 110 and the terminal 120 send and receive information via wireless resources.

It may be understood that the wireless communication system 100 as illustrated in FIG. 1 is merely illustrative purposes. The wireless communication system 100 may further include other network devices, for example, a core network device, a wireless relay device and a wireless backhaul device, which are not illustrated in FIG. 1. A number of network devices and a number of terminals included in the wireless communication system are not limited in embodiments of the present disclosure.

It may be further understood that the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. The networks may be classified into a 2G (generation) network, a 3G network, a 4G network or a future evolution network, such as, a 5G network, also referred to as a new radio (NR) network, based on capacities, rates, latencies and other factors of different networks. For ease of description, a wireless communication network is simply referred to as a network in the disclosure sometimes.

Further, the network device 110 involved in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (Wi-Fi) system, or may also be a gNB in an NR system, or may also be a component or a part of devices for constituting a base station. The network device further may be a vehicle-mounted device in an Internet of Vehicles (V2X) communication system. It should be understood that a specific technology and a specific device form adopted by the network device are not limited in embodiments of the present disclosure.

Further, the terminal 120 in the present disclosure further may be referred to as a terminal device, a user equipment (UE), a mobile station (MS), a mobile terminal (MT), etc., which is a device that provides voice and/or data connectivity to a user. For example, the terminal may be a handheld device or a vehicle-mounted device, etc. with a wireless connection function. At present, some terminals may be, for example, a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in an Internet of Vehicles (V2X) communication system. It should be understood that a specific technology and a specific device form adopted by the terminal are not limited in embodiments of the present disclosure.

In FIG. 1, the terminal 120 communicates with the network device 110. A process of the terminal 120 sending data to the network device 110 can be called as uplink transmission. A process of the network device 110 sending data to the terminal 120 can be called as downlink transmission. During the uplink transmission and the downlink transmission between the terminal 120 and the network device 110, the hybrid automatic repeat request (HARQ) feedback technology is adopted to ensure transmission reliability. For example, after receiving a physical downlink shared channel (PDSCH) of downlink service data sent by the network device 110, the terminal 120 may provide acknowledgement (ACK) or non-acknowledgement (NACK) uplink feedback information corresponding to the PDSCH, so that the network device 110 determines whether to reschedule the downlink service data or schedule new downlink service data to the user terminal. The ACK and NACK uplink feedback information are collectively referred to as uplink feedback acknowledgment information (HARQ-ACK).

In the related arts, coverage enhancement based on repetition mechanism is supported. For example, in NTN, due to a long distance between a satellite/air equipment and a ground UE, a path loss is large, resulting in limited coverage of some channels. It is necessary to enhance uplink control information. However, the related arts do not have coverage enhancement for a common physical uplink control channel (common PUCCH). Therefore, the common physical uplink control channel cannot meet a coverage requirement at present, and it is necessary to provide a solution for performing coverage enhancement on the common physical uplink control channel.

An embodiment of the present disclosure provides a coverage enhancement method, in which a terminal sends, to a network device, repetition indication information for indicating uplink control information repetition on a common physical uplink control channel resource, and determines the number of times to send uplink control information on the common physical uplink control channel resource, so that the terminal sends the uplink control information on the common physical uplink control channel resource based on the determined number of times, and performs coverage enhancement on the common physical uplink control channel.

In an implementation of the uplink coverage enhancement method provided by an embodiment of the present disclosure, the above uplink control information may be an Msg4 HARQ-ACK message, but is not limited thereto, and may also be other uplink control signaling applicable to be transmitted/received on the common PUCCH resource.

FIG. 2 is a flowchart illustrating an uplink coverage enhancement method according to an embodiment. As illustrated in FIG. 2, the uplink coverage enhancement method is performed by a terminal, and includes the following steps.

In step S101, repetition indication information is sent to a network device. The repetition indication information is configured to indicate repetition of uplink control information on a common physical uplink control channel resource by the terminal.

In step S102, the number of times to send the uplink control information on the common physical uplink control channel resource is determined based on a repetition indication sent by the network device.

In step S103, the uplink control information is sent on the common physical uplink control channel resource according to the determined number of times.

In the uplink coverage enhancement method provided by the embodiment of the present disclosure, the terminal sends the repetition indication information to the network device, to indicate the repetition of the uplink control information on the common physical uplink control channel resource by the terminal. The terminal determines the number of times to send the uplink control information on the common physical uplink control channel resource, based on the repetition indication sent by the network device, and sends the uplink control information on the common physical uplink control channel resource according to the determined number of times. Therefore, sending the uplink control information may be implemented according to the determined number of times on the common physical uplink control channel resource, and coverage enhancement can be performed on the common physical uplink control channel.

In an implementation of the uplink coverage enhancement method provided by an embodiment of the present disclosure, the terminal determines to send the repetition indication information to the network device in case of meeting a condition for sending the repetition indication information to the network device.

In an implementation of the uplink coverage enhancement method provided by an embodiment of the present disclosure, meeting the condition for sending the repetition indication information to the network device is determined based on a downlink signal reference signal receiving power threshold.

In an implementation, the downlink signal reference signal receiving power threshold is determined by multiplexing an existing message3 related downlink signal reference signal receiving power]

In another implementation, a custom threshold is determined as the downlink signal reference signal receiving power threshold.

Meeting the condition for sending the repetition indication information to the network device includes that a downlink signal reference signal receiving power measured by the terminal is lower than the downlink signal reference signal receiving power threshold. That is, before sending the repetition indication information to the network device, the terminal determines that the downlink signal reference signal receiving power measured by the terminal is lower than the downlink signal reference signal receiving power threshold.

In the uplink coverage enhancement method provided by the embodiment of the present disclosure, the terminal sends the repetition indication information to the network device, and the repetition indication information includes at least one of a repetition capability and a repetition request. The repetition capability is configured to indicate a capability of the terminal to support uplink control information repetition on the common physical uplink control channel resource. For example, the capability may be whether to support the uplink control information repetition on the common physical uplink control channel resource. That is, the repetition capability at least indicates the repetition capability of the terminal on the common physical uplink control channel resource. The repetition request is configured to indicate that the terminal needs to perform the uplink control information repetition.

In an implementation of the uplink coverage enhancement method provided by an embodiment of the present disclosure, the repetition indication information includes the repetition capability.

In another implementation of the uplink coverage enhancement method provided by an embodiment of the present disclosure, the repetition indication information includes the repetition request.

In another implementation of the uplink coverage enhancement method provided by an embodiment of the present disclosure, the repetition indication information includes the repetition capability and the repetition request.

In the uplink coverage enhancement method provided by the embodiment of the present disclosure, the repetition request can be understood as indicating an implicit relationship. The implicit relationship may be that: if the terminal sends the repetition request to the network device, the network device defaults that the terminal has the repetition capability on the PUCCH. That is, in a case where the terminal sends the repetition request to the network device, the network device defaults that the repetition request is sent to the network device only when the terminal has the repetition capability on the PUCCH.

In the uplink coverage enhancement method provided by the embodiment of the present disclosure, the terminal sends the repetition indication information to the network device, and the repetition indication information includes at least one of the repetition capability and the repetition request. The network device indicates to the terminal the number of times to send the uplink control information on the common physical uplink control channel resource according to the repetition indication information sent by the terminal, and the terminal determines the number of times to send the uplink control information according to the repetition indication, and sends the uplink control information on the common physical uplink control channel resource according to the determined number of times.

In an implementation of the uplink coverage enhancement method provided by an embodiment of the present disclosure, the repetition indication information is indicated based on a physical random access channel (PRACH) resource set, and the PRACH resource set includes at least one PRACH resource.

In an implementation of the uplink coverage enhancement method provided by an embodiment of the present disclosure, a correspondence between the PRACH resource set and the uplink control information repetition is present.

The correspondence between the PRACH resource set and the uplink control information repetition can be understood as the PRACH resource set being used to implicitly indicate the uplink control information repetition.

In an implementation of the uplink coverage enhancement method provided by an embodiment of the present disclosure, a correspondence between the PRACH resource set and a repetition number of the uplink control information is present.

The correspondence between the PRACH resource set and the repetition number of the uplink control information can be understood as the PRACH resource set being used to indicate the repetition number.

In an implementation of the uplink coverage enhancement method provided by the embodiment of the present disclosure, the repetition indication information is determined based on the PRACH resource set, and the PRACH resource set may include at least one of the following.
- a PRACH resource set specific for repetition indication information of uplink control information in a common control channel.

For example, a PRACH resource set specific for Msg4 HARQ-ACK message repetition.
- a PRACH resource set for indicating the repetition indication information of the uplink control information in the common control channel and other information.

For example, a PRACH resource set for indicating Msg3 message repetition is multiplexed. That is, a part of the PRACH resource set for indicating the Msg3 message repetition is used to indicate the Msg3 message repetition, and another part of which is used to indicate the Msg3 message repetition and the repetition indication information, such as used to indicate the Msg4 HARQ-ACK message repetition, involved in the example of the present disclosure.

For another example, the PRACH resource set includes information for indicating the Msg3 message repetition and the repetition indication information, such as used to indicate the Msg4 HARQ-ACK message repetition, involved in the example of the present disclosure.

In another implementation of the uplink coverage enhancement method provided by an embodiment of the present disclosure, the repetition indication information is indicated based on Msg3. The Msg3 includes an information field for indicating the repetition indication information.

In an example, the information field for indicating the repetition indication information in Msg3 includes a single bit.

The single bit is configured to indicate the repetition indication information and/or a first repetition number.

In another example, the information field for indicating the repetition indication information in Msg3 includes a plurality of bits, and the plurality of bits are configured to indicate the repetition indication information and/or the first repetition number.

The first repetition number is a repetition number reported by the terminal to the network device. The first repetition number is a repetition number recommended by the terminal in response to the repetition indication information including the repetition request. The first repetition number is a repetition number supported by the terminal in response to the repetition indication information including the repetition capability.

In an embodiment, the terminal sends the repetition request via the single bit in the information field, and a value of 1 indicates that the terminal has the repetition request, and a value of 0 indicates that the terminal has no repetition request. In a case where the terminal perform repetition indication via the Msg3, if the value of the single bit is 1, it indicates that the terminal requests a repetition request, and if the value of the single bit is 0, it indicates that the terminal has no repetition request. The specific repetition number is determined by the network device.

In an embodiment, the terminal sends the repetition capability via the single bit in the information field, and a value of 1 indicates that the terminal has the repetition capability, and a value of 0 indicates that the terminal has no repetition capability. In a case where the terminal performs the repetition indication via Msg3, if the value of the single bit is 1, it indicates that the terminal has the repetition capability, and the specific repetition number is determined by the network device]

In an embodiment, the terminal sends the repetition request and the repetition number via the single bit in the information field. A value of 1 indicates that the terminal has the repetition request, and the first repetition number is determined to be 4 in a predefined manner. A value of 0 indicates that the terminal has no repetition request.

In an embodiment, the terminal sends the repetition capability and the repetition time via the single bit in the information field, a value of 1 indicates that the terminal has the repetition capability, and the first repetition number is determined to be 4 in a predefined manner, and a value of 0 indicates that the terminal has no repetition capability.

In an embodiment, the plurality of bits are configured to indicate the repetition indication information and/or the first repetition number. In an embodiment, the repetition request is indicated by Msg3, and a correspondence between a specific indication method and the information field indicating the repetition indication information is as follows.
- The information field includes the single bit: the repetition number is determined by the network device, and the terminal determines the repetition number based on an indication of the network device.
- The information field includes the plurality of bits: the plurality of bits include the first repetition number, and the terminal determines whether repetition can be performed based on the first repetition number based on the indication of the network device.
- The information field includes the plurality of bits: the plurality of bits include the first repetition number, the network device determines the repetition number based on the repetition indication sent by the terminal, and instructs the terminal to perform the repetition based on the determined repetition number.

In an embodiment, the plurality of bits are configured to indicate the first repetition number, the first repetition number is a repetition number reported by the terminal to the network device. The first repetition number is a repetition number supported by the terminal in response to the repetition indication information including the repetition capability. The repetition number supported by the terminal includes a maximum repetition number supported by the terminal, and the network device receives the maximum repetition number supported by the terminal and determines the repetition indication using a value not greater than the maximum repetition number.

In an embodiment, the repetition capability is indicated by Msg3, and the correspondence between the specific indication method and the information field indicating the repetition indication information is as follows.
- The information field includes the single bit: the terminal has the capability to perform information repetition, and the specific repetition number is determined by the network device.
- The information field includes the plurality of bits: the plurality of bits include the first repetition number, and the specific repetition number is determined by the network device.

In the embodiment of the present disclosure, the information field of Msg3 may also indicate at least one of:
- whether to support demodulation reference signal (DMRS) bundling; or
- inter-slot frequency hopping.

In the embodiment of the present disclosure, the terminal sends the repetition request and/or the repetition capability to the network device, and the network device may send the repetition indication to the terminal based on the repetition request and/or the repetition capability received.

In an embodiment, the terminal indicates the repetition request via Msg3 and sends the plurality of bits to the network device. The plurality of bits include the first repetition number, and the first repetition number is the repetition number determined by the terminal. The network device sends first indication information to the terminal, for example based on the repetition number. For example, the first indication information is yes or no. The terminal determines whether to be capable of performing the uplink control information repetition. In response to the first indication information being no, the terminal determines that the number of times to send the uplink control information on the common physical uplink control channel resource is a single transmission, and the uplink coverage enhancement method provided in the embodiment of the present disclosure is a method for explicitly indicating the single transmission.

In another embodiment, in the uplink coverage enhancement method provided by the embodiment of the present disclosure, the terminal determines repetition number information based on the repetition indication sent by the network device.

The repetition number information may be a single transmission or multiple transmissions. The multiple transmissions may be understood as the repetition number, which is referred to as a second repetition number for convenience of description. In a case of indicating the single transmission, the uplink coverage enhancement method provided in this embodiment is the method for explicitly indicating the single transmission.

In an implementation, the second repetition number is determined based on the repetition indication sent by the network device, and the second repetition number is the number of times of the terminal performing the uplink control information repetition.

In an implementation, the number of times to send the uplink control information on the common physical uplink control channel resource is determined as a single transmission based on the repetition indication sent by the network device.

In an implementation, the repetition indication sent by the network device to the terminal includes a first signaling and/or a second signaling. The terminal determines the repetition number information of sending the uplink control information on the common physical uplink control channel resource based on the first signaling and/or the second signaling, and sends the uplink control information on the common physical uplink control channel resource based on the determined repetition number information. It should be noted that in a case where the terminal indicates to the network device via the PRACH and/or Msg3 that the terminal does not support/request the uplink control information repetition indication on the common resource, or the terminal makes no uplink indication to the network device, the terminal sends the uplink control information in a single time, that is, the first repetition number and/or the second repetition number are 1. The uplink coverage enhancement method provided in this embodiment is a method for implicitly indicating the single transmission.

The first signaling may be an RRC signaling, and the second signaling may be a DCI or a media access channel control element (MAC CE).

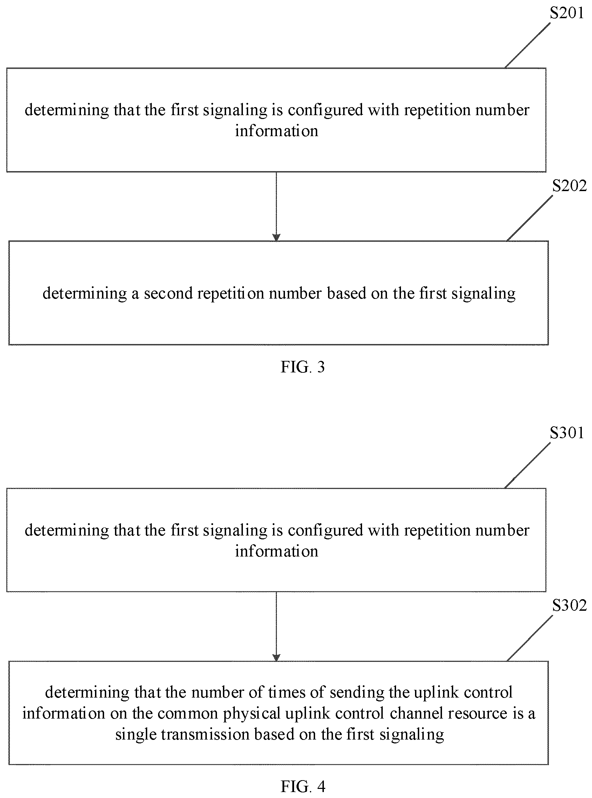

FIG. 3 is a flowchart illustrating an uplink coverage enhancement method according to an embodiment. As illustrated in FIG. 3, the method includes the following steps.

In step S201, it is determined that the first signaling is configured with repetition number information.

In step S202, a second repetition number is determined based on the first signaling.

The repetition number information includes an enable repetition number and/or a validity repetition number, and the enable repetition number and/or the validity repetition number include a single repetition number. The uplink coverage enhancement method provided in this embodiment is a method for implicitly indicating a single transmission.

The second repetition number is a repetition number of performing the uplink control information repetition by the terminal on the common physical uplink control channel resource.

In the embodiment of the present disclosure, the first signaling sent by the network device to the terminal is configured with the enable repetition number and/or the validity repetition number, which include the single repetition number. The terminal determines the second repetition number based on the repetition number value of the first signaling.

In an implementation, the network device indicates repetition enable and the validity repetition number via the first signaling, such as the RRC signaling. The second repetition number is the validity repetition number.

In this embodiment, the terminal determines the repetition number according to a parameter configured by the first signaling, including at least one of the following.
- When the terminal indicates to the network device via the PRACH and/or Msg3 that the terminal supports/requests the uplink control information repetition indication, the second repetition number is a value configured by the terminal using the first signaling sent by the network device.
- When the terminal indicates to the network via the PRACH and/or Msg3 that the terminal does not support/request the uplink control information repetition indication/has no uplink control instruction, the terminal sends the uplink control information in a single time, that is, the second repetition number is 1.

In an embodiment, taking an RRC configuration parameter, namely, RRC configured repetition number = enabled, and the repetition number being a value in {1, 2, 4, 8} as an example, it is determined, according to the parameter configured by the first signaling, that the repetition number is a repetition number value determined from any one of 1, 2, 4, and 8 in a repetition number group, and the terminal performs repetition according to the enable repetition number.

In an implementation, the network device indicates the validity repetition number via the first signaling, such as the RRC signaling, and the validity repetition number include the single repetition number, and the terminal determines the second repetition number according to the parameter configured by the first signaling, including at least one of the following.
- When the terminal indicates to the network via the PRACH and/or Msg3 that the terminal supports/requests the uplink control information repetition indication, the terminal performs the uplink control information repetition according to the second repetition number;
- When the terminal indicates to the network via the PRACH and/or Msg3 that the terminal does not support/request the uplink control information repetition indication/has no uplink control instruction, the terminal sends the uplink control information in a single time.

In an embodiment, taking the single repetition number being a value in {1, 2, 4, 8} as an example, it is determined, according to the parameter configured by the first signaling, that the repetition number is a repetition number value determined from any one of 1, 2, 4, and 8 in the repetition number group, and the terminal performs validity repetition according to the validity repetition number.

FIG. 4 is a flowchart illustrating an uplink coverage enhancement method according to an embodiment. As illustrated in FIG. 4, the method includes the following steps.

In step S301, it is determined that the first signaling is configured with repetition number information.

In step S302, the number of times to send the uplink control information on the common physical uplink control channel resource is determined as a single transmission based on the first signaling.

The repetition number information includes a disable repetition number and/or an invalidity repetition number. A situation where the disable repetition number and/or the invalidity repetition number are included in the first signaling indicates that the network device informs the terminal of not configuring the repetition number via the first signaling (i.e., RRC signaling), and the terminal may configure the repetition number via other uplink control manners. The uplink coverage enhancement method provided in this embodiment is a method for implicitly indicating the single transmission.

In an embodiment, the RRC configuration parameter, namely, RRC configured repetition number=disabled, in the first signaling indicates a disabled state.

In an embodiment, taking the repetition number group being {-1, 2, 4, 8} and the indicated repetition number being -1 as an example, the terminal determines that it is the disable repetition number according to the repetition number indicated the first signaling being -1.

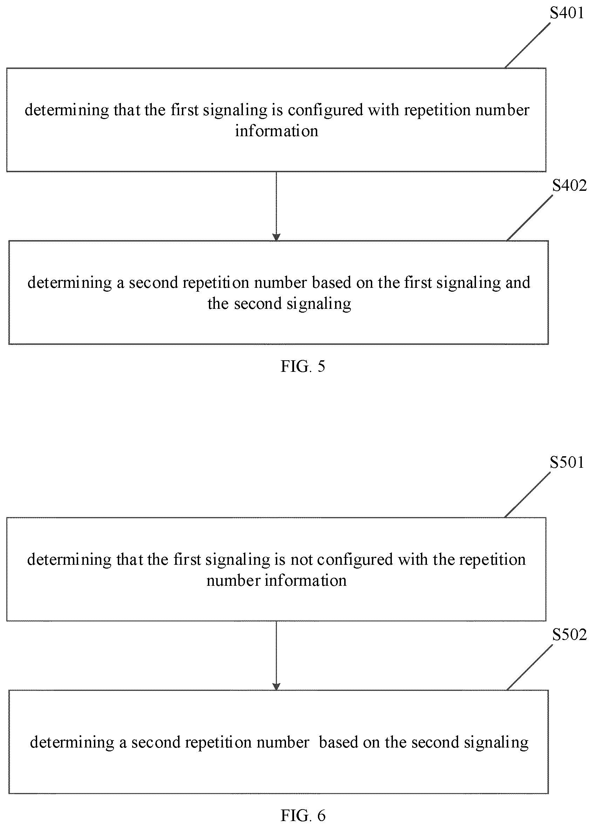

FIG. 5 is a flowchart illustrating an uplink coverage enhancement method according to an embodiment. As illustrated in FIG. 5, the method includes the following steps.

In step S401, it is determined that the first signaling is configured with repetition number information.

In step S402, a second repetition number is determined based on the first signaling and the second signaling.

The repetition number information includes the enable repetition number and/or the validity repetition number, and the enable repetition number and/or the validity repetition number including a plurality of repetition numbers.

The second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the network device indicates the second repetition number based both the first signaling and the second signaling, for example, the first signaling is an RRC signaling, and the second signaling is a DCI indication or a MAC CE.

In an embodiment, the first signaling is the RRC signaling, and the second signaling is the DCI. An information field configured in the RRC signaling is that RRC configured repetition number=enabled, that is, the repetition number configured by the RRC is enabled, and an information field corresponding to the DCI indication is an information field of DCI format 1_0 scrambled by TC-RNTI for Msg4. The network device indicates via the first signaling and the second signaling, and the terminal determines the second repetition number according to the RRC signaling and the DCI signaling sent by the network device.

In an implementation, the RRC signaling indicates the enable repetition number and/or the validity repetition number. If the repetition number includes a plurality of values, the network device may indicate the repetition number by selecting one value for indication from the repetition numbers indicated by the RRC signaling and the information field, by scheduling DCI (DCI format 1_0 by TC-RNTI). The terminal determines the second repetition number according to the RRC signaling and the DCI indication.

Based on the above, the method for determining the second repetition number in the embodiment of the present disclosure includes at least one of the following.
- The terminal indicates to the network device via the PRACH and/or Msg3 that the terminal supports/requests the uplink control information message repetition indication, and the network device indicates the second repetition number via the information field in the DCI format 1_0 scrambled by TC-RNTI for scheduling Msg4.
- The terminal indicates to the network device via the PRACH and/or Msg3 that the terminal supports/requests the uplink control information repetition indication, and the network device indicates via the information field in the PDSCH carrying Msg4. For example, the second repetition number is indicated via the information field of the PDSCH (such as MAC CE).

In an implementation of the uplink coverage enhancement method provided in the embodiment of the present disclosure, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In the uplink coverage enhancement method provided by the embodiment of the present disclosure, the second signaling includes the DCI signaling of the network device scheduling message4, or the second signaling includes the MAC CE in the PDSCH carrying message4.

In an implementation, in response to the second signaling including the DCI signaling of the network device scheduling message4, the second signaling includes at least one information field, which is an information field corresponding to most significant X bits (MSB) in a modulation and coding scheme (MCS) field, where X is a positive integer.

In an embodiment, X_bit of MSB is used to select one value from the plurality of repetition numbers of the first signaling. Taking 5 bits included in the MSB field as an example, the terminal determines the MCS field from the last 5-X bits, that is, selects an information field corresponding to one or more bits from the most significant bit as the information field of the repetition indication for indication. In a case where it is no necessary to indicate the repetition number by the MCS field, all bits are used to indicate the MCS.

In an embodiment, in a case where it is no necessary to indicate the repetition number by the MCS field, all bits are used to indicate the MCS. Situations where it is no necessary to indicate the repetition number by the MCS field includes at least one of:
- the terminal not having the repetition capability;
- the terminal not reporting the repetition request; or
- the repetition number being directly indicated using the first signaling.

FIG. 6 is a flowchart illustrating an uplink coverage enhancement method according to an embodiment. As illustrated in FIG. 6, the method includes the following steps.

In step S501, it is determined that the first signaling is not configured with repetition number information. The repetition number information may include repetition enable and/or repetition number information.

In step S502, a second repetition number is determined based on the second signaling.

The second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

The second signaling includes a DCI signaling or a MAC CE signaling.

In an implementation of the embodiment of the present disclosure, the first signaling of the network device is not configured with the repetition number information, that is, the first signaling does not include the repetition number, and the terminal does not report enable information.

In an implementation, the RRC signaling does not include the repetition number, and the network device indicates the repetition number via an information field in the DCI (DCI format 1_0 by TC-RNTI) for scheduling message4 or the MAC CE signaling. The terminal determines the second repetition number according to the DCI indication or the MAC CE signaling.

In an implementation, RRC signaling indicates a disable repetition number and/or an invalidity repetition number, and the network device indicates the repetition number by scheduling DCI (DCI format 1_0 by TC-RNTI), and the indicated second repetition number is 1.

Based on the above, a method for the terminal to determine the repetition number in an embodiment includes at least one of the following.
- The terminal indicates to the network device via the PRACH and/or Msg3 that the terminal supports/requests the uplink control information message repetition indication, and the network device indicates the second repetition number via the information field in the DCI format 1_0 scrambled by TC-RNTI for scheduling Msg4.
- The terminal indicates to the network device via the PRACH and/or Msg3 that the terminal supports/requests the uplink control information repetition indication, and the network device indicates via the information field in the PDSCH carrying Msg4. For example, the second repetition number is indicated via the information field of the PDSCH (such as MAC CE).

In an implementation, a condition for sending the uplink control information a single time is determined to be met, and the uplink control information is sent in a single time. Meeting the condition for sending uplink control information in a single time includes at least one of:
the terminal not supporting the uplink control information repetition;
the terminal not requesting the uplink control information repetition based on a physical random access channel resource set and/or Msg3;
receiving indication information for indicating a single transmission sent by the network device.

In an implementation of the uplink coverage enhancement method provided in the embodiment of the present disclosure, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In the uplink coverage enhancement method provided by the embodiment of the present disclosure, the second signaling includes the DCI signaling of the network device scheduling message4, or the second signaling includes the MAC CE in the PDSCH carrying message4.

In an implementation, in response to the second signaling including the DCI signaling of the network device scheduling message4, the second signaling includes at least one information field, which is an information field corresponding to most significant X bits (MSB) in a modulation and coding scheme (MCS) field, where X is a positive integer.

In an embodiment, X_bit of MSB is used to select one value from the plurality of values of the first signaling. The terminal determines the MCS field from the last 5-X bits. In a case where it is no necessary to indicate the repetition number by the MCS field, all bits are used to indicate the MCS.

In an embodiment, situations where it is no necessary to indicate the repetition number by the MCS field includes at least one of:
- the terminal not having the repetition capability;
- the terminal not reporting the repetition request; or
- the repetition number being directly indicated using the first signaling.

In the uplink coverage enhancement method provided by the embodiment of the present disclosure, the uplink control information is Msg4 HARQ-ACK. Msg4 HARQ-ACK repetition is performed on the common physical uplink control channel resource to perform uplink coverage enhancement.

Based on the uplink coverage enhancement method provided in the embodiment of the present disclosure, the terminal sends Msg4 HARQ-ACK repetition indication information to the network device, and the repetition indication information includes a repetition request and/or a repetition capability.

The repetition capability indicates a capability of the terminal to support Msg4 HARQ-ACK repetition on the common physical uplink control channel resource. The repetition request indicates that the terminal needs to perform the Msg4 HARQ-ACK repetition.

In an implementation, Rsrp-Threshold msg4 HARQ-ACK is defined, and the repetition indication is sent only when a downlink signal RSRP measured by the terminal is lower than a threshold. An RSRP threshold may be multiplexed with the existing rsrp-ThresholdMsg3 or may be a new defined threshold.

In an implementation, the Msg4 HARQ-ACK repetition indication information is indicated based on a physical random access channel resource set (PRACH set).

There is a correspondence between the PRACH resource and the Msg4 HARQ-ACK message repetition, and there is also a correspondence between the PRACH set and the message repetition number.

In an embodiment of the present disclosure, a correspondence of indicating the repetition indication information according to the PRACH resource is as follows:
- a PRACH resource set specific for Msg4 HARQ-ACK message repetition; or
- a PRACH resource set for indicating Msg3 message repetition and Msg4 HARQ-ACK message repetition and other information.

In an embodiment, in the PRACH resource, the PRACH resource set specific for Msg4 HARQ-ACK message repetition is present, which is independent of the existing PRACH resource set. The terminal performs the message repetition according to the message repetition number indicated by the PRACH set for Msg4 HARQ-ACK.

In an embodiment, at least part of the PRACH resource in Msg3 is multiplexed to indicate the message repetition number of the Msg4 HARQ-ACK message repetition. In this embodiment, the terminal supports Msg3 message repetition and Msg4 HARQ-ACK message repetition. The PRACH resource set corresponds to a specific message repetition number, that is, the repetition number of the multiplexed Msg3 message.

In another implementation, the Msg4 HARQ-ACK repetition indication information is indicated based on Msg3, and the Msg3 includes an information field for indicating the repetition indication information, that is, the repetition request and/or repetition capability is indicated by the content in Msg3.

In an implementation of indicating the repetition request by the content in Msg3 the repetition request is indicated by a 1-bit request, but a specific parameter is determined by the network device. The terminal determines the repetition number according to the instruction of the network device.

In another implementation of indicating the repetition request by the content in Msg3, the repetition request is indicated by a plurality of bits, and indicates a repetition number recommended by the user. The repetition number is determined by the terminal. The terminal determines whether to perform repetition based on an instruction (yes or no) of the network device.

In another implementation of indicating the repetition request by the content in Msg3, the repetition request is indicated by a plurality of bits, and indicate the repetition number recommended by the user, the network device determines the repetition number, and the network device instructs the terminal on the repetition number.

In an implementation of indicating the repetition capability by the content in Msg3, the repetition capability is indicated by a 1-bit request, which indicates support for repetition. The specific repetition number is determined by the network device.

In another implementation of indicating the repetition capability by the content in Msg3, the repetition capability is indicated by a plurality of bits, which indicates the maximum repetition number that the terminal can support. The specific repetition number is determined by the network device. The repetition number determined by the network device does not exceed the maximum repetition number supported by the terminal.

It can be understood that when the repetition capability is indicated by the content in Msg3, in addition to the above capabilities, it may further indicate whether demodulation reference signals (DMRS) bundling and/or inter-slot frequency hopping are supported.

In an embodiment, the terminal sends the repetition request via a single bit in the information field, and a value of 1 indicates that the terminal has a repetition request, and a value of 0 indicates that the terminal has no repetition request. When the terminal indicates repetition by Msg3, if the single bit is 1, it indicates that the terminal has the repetition request, and if the single bit is 0, it indicates that the terminal has no repetition request, and the specific repetition number is determined by the network device.

In an embodiment, the terminal sends the repetition capability through a single bit in the information field, and a value of 1 indicates that the terminal has the repetition capability, and a value of 0 indicates that the terminal has no repetition capability. When the terminal indicates repetition by Msg3, if the single bit is 1, it indicates that the terminal has the repetition capability, and the specific repetition number is determined by the network device.

In an embodiment, the terminal sends the repetition request and the repetition number via a single bit in the information field. A value of 1 indicates that the terminal has the repetition request and the repetition number is determined to be 4 in a predefined manner. A value of 0 indicates that the terminal has no repetition request.

In an embodiment, the terminal sends the repetition capability and the repetition number via a single bit in the information field. The value of 1 indicates that the terminal has a repetition capability and the repetition number is determined to be 4 in a predefined manner. A value of 0 indicates that the terminal has no repetition capability.

In an embodiment, the plurality of bits are used to indicate the repetition indication information and/or the first repetition number. The repetition number supported by the terminal includes the maximum repetition number supported by the terminal, and the network device receives the maximum repetition number supported by the terminal and determines the repetition indication using a value not greater than the maximum repetition number.

Based on the above example, the terminal determines the repetition number according to an uplink indication.

The terminal determines the repetition number based on an RRC signaling and/or a DCI signaling, or the terminal determines the repetition number based on the RRC signaling and/or a MAC CE signaling.

In an implementation of determining the repetition number based on the uplink indication of the terminal, the network device indicates an enable repetition number and/or a validity repetition number via the RRC signaling (such as common PUCCH configuration), and the value is a determined value, such as one of a group of values {1, 2, 4, 8}. At this time, the cell-specific repetition number setting is used by default, and the terminal determines the repetition number based on the parameter configured by the RRC.

In an implementation of the repetition number indicating the enable repetition number and/or the validity repetition number according to the RRC signaling, the terminal indicates to the network device by the PRACH resource set and/or Msg3 that it supports/requests Msg4 HARQ-ACK repetition, and the terminal applies a value configured by the RRC of the network device to perform the Msg4 HARQ-ACK repetition.

In an implementation of the repetition number indicating the enable repetition number and/or the validity repetition number according to the RRC signaling, the terminal indicates to the network device via the PRACH resource set and/or Msg3 that it does not support/request the Msg4 HARQ-ACK repetition or has no uplink indication, and the terminal sends uplink control information in a single time. The uplink coverage enhancement method provided in this embodiment is a method for implicitly indicating a single transmission.

In an implementation of determining the repetition number based on the uplink indication of the terminal, the network device indicates the enable repetition number and/or the validity repetition number via the RRC signaling (such as common PUCCH configuration), and the number includes one or more values, such as some values {2, 4, 8} in {1, 2, 4, 8}.

In an implementation of the repetition number indicating the enable repetition number and/or the validity repetition number according to the RRC signaling, when the terminal indicates to the network device via the PRACH resource set and/or Msg3 that it supports/requests the Msg4 HARQ-ACK repetition, the network device may indicate the repetition number by selecting one value for indication from the plurality of values by a specific field in the DCI signaling (DCI 1-0 format by TC-RNTI) for scheduling message4. At this time, the repetition number is indicated by a DCI instruction, and the terminal determines the repetition number according to an indication of the DCI instruction of the network device.

The repetition number is directly indicated according to a bit value of the specific field; or
indicated by an index of a set of predefined values corresponding to the bit value of the specific field.

At this time, the repetition number is indicated by a DCI instruction, and the terminal determines the repetition number according to an indication of the DCI instruction of the network device.

In an implementation of the repetition number indicating the enable repetition number and/or the validity repetition number according to the RRC signaling, when the terminal indicates to the network device via the PRACH resource set and/or Msg3 that it supports/requests the Msg4 HARQ-ACK repetition, the network device may indicate the repetition number by selecting one value from the plurality of values through a PDSCH carrying message4. At this time, the repetition number is indicated by PDSCH information (such as MAC CE), and the terminal determines the repetition number according to the MAC CE indication of the network device.

In an implementation of the repetition number indicating the enable repetition number and/or the validity repetition number according to the RRC signaling, when the terminal indicates to the network device via the PRACH resource set and/or Msg3 that it does not support/request Msg4 HARQ-ACK repetition or has no uplink indication, the terminal sends an uplink control instruction in a single time.

In an implementation of determining the repetition number according to the uplink indication of the terminal, the network device does not configure the repetition number via the RRC, that is, a configuration of the RRC does not include this parameter.

In an implementation of the repetition number not being configured by the RRC of the network device, the terminal indicates to the network device via the PRACH resource set and/or Msg3 that it supports/requests Msg4 HARQ-ACK repetition, and the network device indicates the repetition number through a specific field in the DCI instruction (DCI 1-0 format by TC-RNTI) for scheduling Msg4.

The repetition number is directly indicated according to a bit value of the specific field; or
indicated by an index of a set of predefined values corresponding to the bit value of the specific field.

The repetition number is indicated by a DCI instruction, and the terminal determines the repetition number according to the indication of the DCI instruction of the network device.

In an implementation of the repetition number not being configured by the RRC of the network device, the terminal indicates to the network device via the PRACH resource set and/or Msg3 that it supports/requests the Msg4 HARQ-ACK repetition, and the network device may indicate the repetition number by selecting one value from the plurality of values through a PDSCH carrying message4. At this time, the repetition number is indicated by PDSCH information (such as MAC CE), and the terminal determines the repetition number according to the MAC CE indication of the network device.

In an implementation of the repetition number not being configured by the RRC of the network device, the terminal indicates to the network device via the PRACH resource set and/or Msg3 that it does not support/request Msg4 HARQ-ACK repetition or has no uplink indication, and the terminal sends an uplink control instruction in a single time. The uplink coverage enhancement method provided in this embodiment is a method for implicitly indicating a single transmission.

In an implementation of determining the repetition number according to the uplink indication of the terminal, the network device indicates a disable repetition number and/or an invalidity repetition number via RRC signaling (such as common PUCCH configuration), for example, the repetition number is an unavailable value. The uplink coverage enhancement method provided in this embodiment is a method for implicitly indicating a single transmission.

In an implementation of the repetition number being the disable repetition number and/or the invalidity repetition number configured by the RRC of the network device, the terminal indicates to the network device via the PRACH resource set and/or Msg3 that it supports/requests the Msg4 HARQ-ACK repetition, and the network device indicates the repetition number via a specific field in the DCI (DCI 1-0 format by TC-RNTI) for scheduling Msg4.

The repetition number is directly indicated according to a bit value of a specific field; or
indicated by an index of a set of predefined values corresponding to the bit value of the specific field.

The repetition number is indicated by a DCI instruction, and the terminal determines the repetition number according to an indication of the DCI instruction of the network device.

In an implementation of the repetition number being the disable repetition number and/or the invalidity repetition number configured by the RRC of the network device, the terminal indicates to the network device via the PRACH resource set and/or Msg3 that it supports/requests the Msg4 HARQ-ACK repetition, and the network device may indicate the repetition number by selecting one value from the plurality of values through a PDSCH carrying message4. At this time, the repetition number is indicated by PDSCH information (such as MAC CE), and the terminal determines the repetition number according to the MAC CE indication of the network device.

In an implementation of the repetition number being the disable repetition number and/or the invalidity repetition number configured by the RRC of the network device, the terminal indicates to the network device via the PRACH resource set and/or Msg3 that it does not support/request Msg4 HARQ-ACK repetition or has no uplink indication, and the terminal sends an uplink control instruction in a single time, that is, the first repetition number and/or the second transmission number is 1.

In an implementation of determining the repetition number based on the uplink indication of the terminal, the terminal does not indicate to the network device via the PRACH resource set and/or Msg3 that it supports/requests the Msg4 HARQ-ACK repetition, or indicates to the network device via the PRACH resource set and/or Msg3 that it does not support/request the Msg4 HARQ-ACK repetition, and the terminal performs a single transmission of Msg4 HARQ-ACK, that is, the first repetition number and/or the second transmission number is 1. The uplink coverage enhancement method provided in this embodiment is a method for implicitly indicating a single transmission.

In the uplink coverage enhancement method provided by the embodiment of the present disclosure, the terminal sends the repetition indication information to the network device, to indicate the repetition of the uplink control information on the common physical uplink control channel resource by the terminal. The terminal determines the number of times to send the uplink control information on the common physical uplink control channel resource, based on the repetition indication sent by the network device, and sends the uplink control information on the common physical uplink control channel resource according to the determined number of times. Therefore, sending the uplink control information may be implemented according to the determined number of times on the common physical uplink control channel resource, and coverage enhancement can be performed on the common physical uplink control channel.

Based on the same conception, there is provided an uplink coverage enhancement method, performed by a network device, in embodiments of the present disclosure.

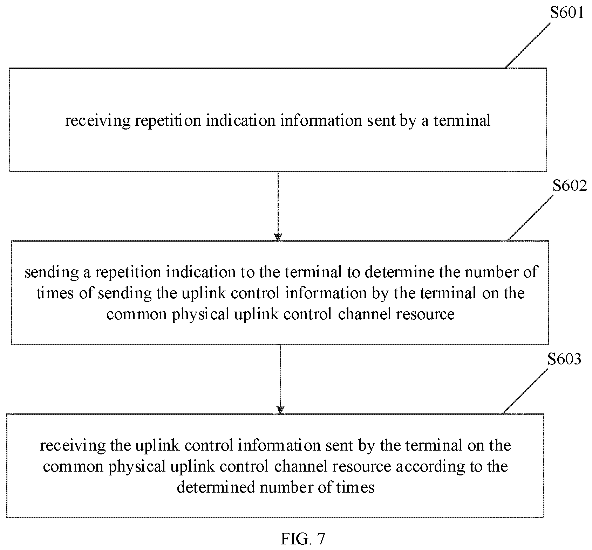

FIG. 7 is a flowchart illustrating an uplink coverage enhancement method according to an embodiment. As illustrated in FIG. 7, the uplink coverage enhancement method may be performed by a network device, and includes the following steps.

In step S601, repetition indication information sent by a terminal is received.

In step S602, a repetition indication is sent to the terminal to determine the number of times to send the uplink control information on the common physical uplink control channel resource by the terminal.

In step S603, the uplink control information sent by the terminal on the common physical uplink control channel resource according to the determined number of times is received.

In the uplink coverage enhancement method provided by the embodiment of the present disclosure, the terminal sends the repetition indication information to the network device, to indicate the repetition of the uplink control information on the common physical uplink control channel resource by the terminal. The terminal determines the number of times to send the uplink control information on the common physical uplink control channel resource, based on the repetition indication sent by the network device, and sends the uplink control information on the common physical uplink control channel resource according to the determined number of times. Therefore, sending the uplink control information may be implemented according to the determined number of times on the common physical uplink control channel resource, and coverage enhancement can be performed on the common physical uplink control channel.

In an implementation of the uplink coverage enhancement method provided by an embodiment of the present disclosure, the terminal determines to send the repetition indication information to the network device in case of meeting a condition for sending the repetition indication information to the network device.

In an implementation of the uplink coverage enhancement method provided by an embodiment of the present disclosure, meeting the condition for sending the repetition indication information to the network device is determined based on a downlink signal reference signal receiving power threshold.

In an implementation, the downlink signal reference signal receiving power threshold is determined by multiplexing an existing message3 related downlink signal reference signal receiving power.

In another implementation, a custom threshold is determined as the downlink signal reference signal receiving power threshold.

Meeting the condition for sending the repetition indication information to the network device includes that a downlink signal reference signal receiving power measured by the terminal is lower than the downlink signal reference signal receiving power threshold. That is, before sending the repetition indication information to the network device, the terminal determines that the downlink signal reference signal receiving power measured by the terminal is lower than the downlink signal reference signal receiving power threshold.

In the uplink coverage enhancement method provided by the embodiment of the present disclosure, the terminal sends the repetition indication information to the network device, and the repetition indication information includes at least one of a repetition capability and a repetition request. The repetition capability indicates a capability of the terminal to support uplink control information repetition on the common physical uplink control channel resource. For example, the capability may be whether to support the uplink control information repetition on the common physical uplink control channel resource. That is, the repetition capability at least indicates the repetition capability of the terminal on the common physical uplink control channel resource. The repetition request indicates that the terminal needs to perform the uplink control information repetition.

In an implementation of the uplink coverage enhancement method provided by an embodiment of the present disclosure, the repetition indication information includes the repetition capability.

In another implementation of the uplink coverage enhancement method provided by an embodiment of the present disclosure, the repetition indication information includes the repetition request.

In another implementation of the uplink coverage enhancement method provided by an embodiment of the present disclosure, the repetition indication information includes the repetition capability and the repetition request.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on Msg3, and the Msg3 includes an information field for indicating the repetition indication information;
in which, the information field includes a single bit; and the single bit is configured to indicate the repetition indication information and/or a repetition number in a single repetition number group; or,
the information field includes a plurality of bits; and the plurality of bits are configured to indicate a first repetition number, in which, the first repetition number is a repetition number received by the network device from the terminal;
in which,, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
the first signaling is configured with repetition number information, the repetition number information includes an enable repetition number and/or a validity repetition number, and the enable repetition number and/or the validity repetition number include a single repetition number, a second repetition number is determined based on the first signaling, the second repetition number is a repetition number of performing the uplink control information repetition by the terminal on the common physical uplink control channel resource;
the first signaling is configured with the repetition number information, the repetition number information includes a disable repetition number and/or an invalidity repetition number, the number of times to send the uplink control information on the common physical uplink control channel resource is determined to be a single transmission based on the first signaling;
the first signaling is configured with the repetition number information, the repetition number information includes the enable repetition number and/or the validity repetition number, and the enable repetition number and/or the validity repetition number include a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
the first signaling is not configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes downlink control signaling (DCI) of the network device scheduling message4, or the second signaling includes a MAC CE in a PDSCH carrying message4.

In an implementation, the second signaling includes the DCI of the network device scheduling message4, at least one information field included in the second signaling is an information field corresponding to most significant X bits in a MCS field, where X is a positive integer.

In an implementation, the first signaling is an RRC signaling.

In an implementation, before receiving the repetition indication information sent by the terminal, the method further includes:
determining that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or Msg3;
the network device sending indication information for indicating a single transmission.

In an implementation, the uplink control information includes a Msg4 HARQ-ACK message.

It can be understood that the uplink coverage enhancement method performed by the network device provided in an embodiment of the present disclosure is similar to the uplink coverage enhancement method performed by the terminal, reference can be made to the description of the relevant embodiments mentioned above for details, and the similarities will not be repeated here.

The uplink coverage enhancement method provided in the present disclosure can be applied to a process of implementing uplink coverage enhancement through interaction between the terminal and the network device. In the uplink coverage enhancement method implemented by the interaction between the terminal and the network device, the terminal and the network device each has relevant functions to implement the uplink coverage enhancement method in involved the above embodiments, which will not be further repeated herein.

It needs to be noted that, those skilled in the art may understand that various implementations/embodiments involved in the embodiments of the present disclosure may be used in combination with the above embodiments, and may be independently used. Whether independently used or used in combination with the above embodiments, the implementation principle is similar. In embodiments of the present disclosure, part of embodiments is illustrated by the implementations used together. It may be understood by those skilled in the art that the examples are not a limitation of embodiments of the present disclosure.

Based on the same conception, an uplink coverage enhancement apparatus is further provided in embodiments of the present disclosure.

It may be understood that the uplink coverage enhancement apparatus provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

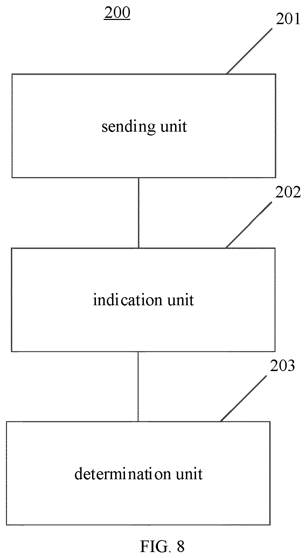

FIG. 8 is a block diagram illustrating an uplink coverage enhancement apparatus according to an embodiment. As illustrated in FIG. 8, the uplink coverage enhancement apparatus 200 includes a sending unit 201 and an indication unit 202.

The sending unit 201 is configured to send repetition indication information to a network device, in which, the repetition indication information is configured to indicate repetition of uplink control information on a common physical uplink control channel resource by the terminal.

The indication unit 202 is configured to determine, based on a repetition indication sent by the network device, the number of times to send the uplink control information on the common physical uplink control channel resource;

The indicating unit 202 is further configured to send the uplink control information on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on Msg3, and the Msg3 includes an information field for indicating the repetition indication information;
in which, the information field includes a single bit; and
the single bit is configured to indicate the repetition indication information and/or a repetition number in a single repetition number group; or,
the information field includes a plurality of bits; and
the plurality of bits are configured to indicate a first repetition number, in which, the first repetition number is a repetition number reported by the terminal to the network device;
in which, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
in response to the first signaling being configured with repetition number information, the repetition number information including an enable repetition number and/or a validity repetition number, and the enable repetition number and/or the validity repetition number including a single repetition number, a second repetition number is determined based on the first signaling, the second repetition number is a repetition number of performing the uplink control information repetition by the terminal on the common physical uplink control channel resource;
in response to the first signaling being configured with the repetition number information, the repetition number information including a disable repetition number and/or an invalidity repetition number, the number of times to send the uplink control information on the common physical uplink control channel resource is determined as a single transmission based on the first signaling;
in response to the first signaling being configured with the repetition number information, the repetition number information including the enable repetition number and/or the validity repetition number, and the enable repetition number and/or the validity repetition number including a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
in response to the first signaling not being configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes DCI of the network device scheduling message4, or the second signaling includes a MAC CE in a PDSCH carrying message4.

In an implementation, in response to the second signaling including the DCI of the network device scheduling message4, at least one information field included in the second signaling is an information field corresponding to most significant X bits in a MCS field, where X is a positive integer.

In an implementation, the first signaling is an RRC signaling.

In an implementation, before sending the repetition indication information to the network device, the apparatus further includes a determination unit 203.

The determination unit 203 is configured to determine that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;
in which, meeting the condition for sending uplink control information in a single time includes at least one of:
the terminal not supporting the uplink control information repetition;
the terminal not requesting to send the repetition indication information based on a physical random access channel resource set and/or Msg3;
receiving indication information for indicating a single transmission sent by the network device.

In an implementation, the uplink control information includes a (Msg4 HARQ-ACK message.

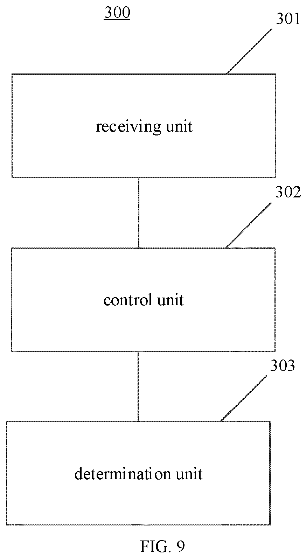

FIG. 9 is a block diagram illustrating an uplink coverage enhancement apparatus according to an embodiment. As illustrated in FIG. 9, the uplink coverage enhancement apparatus 300 includes a receiving unit 301 and a control unit 302.

The receiving unit 301 is configured to receive repetition indication information sent by a terminal, in which, the repetition indication information is configured to indicate repetition of uplink control information on a common physical uplink control channel resource by the terminal; and

The control unit 302 is configured to send a repetition indication to the terminal, in which, the repetition indication is used to instruct the terminal to determine the number of times to send the uplink control information on the common physical uplink control channel resource by the terminal;

The control unit 302 is further configured to receive the uplink control information sent by the terminal on the common physical uplink control channel resource according to the determined number of times.

In an implementation, the repetition indication information includes at least one of:
a repetition capability, in which, the repetition capability is configured to indicate a capability of the terminal to support uplink control information repetition on the common physical uplink control channel resource; or
a repetition request, in which, the repetition request is configured to indicate that the terminal needs to perform uplink control information repetition.

In an implementation, the repetition indication information is indicated based on a physical random access channel resource set;
in which, a correspondence between the physical random access channel resource set and the uplink control information repetition is present; or
a correspondence between the physical random access channel resource set and a repetition number of the uplink control information is present.

In an implementation, the repetition indication information is indicated based on Msg3, and the Msg3 includes an information field for indicating the repetition indication information;
in which, the information field includes a single bit; and
the single bit is configured to indicate the repetition indication information and/or a repetition number in a single repetition number group; or,
the information field includes a plurality of bits; and
the plurality of bits are configured to indicate a first repetition number, in which, the first repetition number is a repetition number received by the network device from the terminal;
in which,, the first repetition number is a repetition number supported by the terminal in response to the repetition indication information including the repetition capability; or
the first repetition number is a repetition number recommended by the terminal in response to the repetition indication information including the repetition request.

In an implementation, the repetition indication includes a first signaling and/or a second signaling;
the first signaling is configured with repetition number information, the repetition number information includes an enable repetition number and/or a validity repetition number, and the enable repetition number and/or the validity repetition number include a single repetition number, a second repetition number is determined based on the first signaling, the second repetition number is a repetition number of performing the uplink control information repetition by the terminal on the common physical uplink control channel resource;
the first signaling is configured with the repetition number information, the repetition number information includes a disable repetition number and/or an invalidity repetition number, the number of times to send the uplink control information on the common physical uplink control channel resource is determined to be a single transmission based on the first signaling;
the first signaling is configured with the repetition number information, the repetition number information includes the enable repetition number and/or the validity repetition number, and the enable repetition number and/or the validity repetition number include a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
the first signaling is not configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

In an implementation, the second signaling includes at least one of the following information fields:
a first information field, in which, a bit value of the first information field represents an index of a repetition number among a plurality of repetition numbers configured by the first signaling;
a second information field, in which, a bit value of the second information field represents an index of a predefined repetition number; or
a third information field, in which, the third information field represents the repetition number.

In an implementation, the second signaling includes DCI of the network device scheduling message4, or the second signaling includes a MAC CE in a PDSCH carrying message4.

In an implementation, the second signaling includes the DCI of the network device scheduling message4, at least one information field included in the second signaling is an information field corresponding to most significant X bits in a MCS field, where X is a positive integer.

In an implementation, the first signaling is an RRC signaling.

In an implementation, before receiving the repetition indication information sent by the terminal, the apparatus further includes a determination unit 303.

The determination unit 303 is configured to determine that a downlink signal reference signal receiving power measured by the terminal is lower than a downlink signal reference signal receiving power threshold.

In an implementation, a condition for sending the uplink control information a single time is determined to be met, the number of times to send the uplink control information on the common physical uplink control channel resource is determined to be a single transmission;

in which, meeting the condition for sending uplink control information in a single time includes at least one of:
the terminal not supporting the uplink control information repetition;
the terminal not requesting to send the repetition indication information based on a physical random access channel resource set and/or message3;
the network device sending indication information for indicating a single transmission.

**In** an implementation, the uplink control information includes a Msg4 HARQ-ACK message.

With regard to the apparatus in the above embodiments, the specific way in which each module performs the operation has been described in the embodiments of the method and will not be elaborated here.

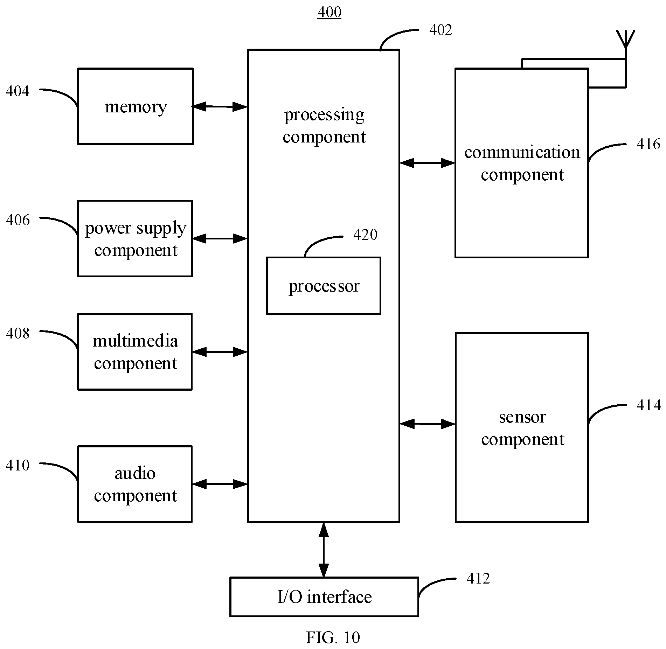

FIG. 10 is a block diagram illustrating a device 400 for feedback according to an embodiment. For example, the device 400 may be a mobile phone, a computer, a digital broadcasting terminal, a messaging device, a game console, a tablet device, a medical equipment, a fitness equipment, a personal digital assistant, etc.

As illustrated in FIG. 10, the device 400 may include one or more components: a processing component 402, a memory 404, a power supply component 406, a multimedia component 408, an audio component 410, an input/output (I/O) interface 412, a sensor component 414, and a communication component 416.

The processing component 402 generally controls the whole operation of the device 400, such as operations related to display, phone call, data communication, camera operation and recording operation. The processing component 402 may include one or more processors 420 to perform instructions, to complete all or part of steps of the above method. In addition, the processing component 402 may include one or more modules for the convenience of interaction between the processing component 402 and other components. For example, the processing component 402 may include a multimedia module for the convenience of interaction between the multimedia component 408 and the processing component 402.

The memory 404 is configured to store all types of data to support the operation of the device 400. Examples of the data include the instructions of any applications or methods operated on the device 400, contact data, phone book data, messages, pictures, videos, etc. The memory 404 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 406 may provide power supply for all components of the device 400. The power supply component 406 may include a power supply management system, one or more power supplies, and other units related to generating, managing and distributing power for the device 400.

The multimedia component 408 includes an output interface screen provided between the device 400 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 408 includes a front camera and/or a rear camera. When the device 400 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 410 is configured as an output and/or input signal. For example, the audio component 410 includes a microphone (MIC). When the device 400 is in operation mode, such as call mode, record mode, and speech recognition mode, the microphone is configured to receive external audio signals. The audio signals received may be further stored in the memory 404 or sent via the communication component 416. In some embodiments, the audio component 410 further includes a speaker configured to output an audio signal.

The I/O interface 412 provides an interface for the processing component 402 and the peripheral interface module, and the peripheral interface module may be a keyboard, a click wheel, a button, etc. The buttons may include, but be not limited to, a home button, a volume button, a start button and a lock button.

The sensor component 414 includes one or more sensors, configured to provide various aspects of status assessment for the device 400. For example, the sensor component 414 may detect the on/off state of the device 400 and the relative positioning of the component. For example, the component is a display and a keypad of the device 400. The sensor component 414 may further detect the location change of the device 400 or one component of the device 400, the presence or absence of contact between the user and the device 400, the orientation or acceleration/deceleration of the device 400, and the temperature change of the device 400. The sensor component 414 may include a proximity sensor, which is configured to detect the existence of the objects nearby without any physical contact. The sensor component 414 may further include a light sensor such as CMOS or CCD image sensor, which is configured to use in imaging applications. In some embodiments, the sensor component 414 may further include an acceleration transducer, a gyroscope sensor, a magnetic sensor, a pressure sensor or a temperature sensor.

The communication component 416 is configured for the convenience of wire or wireless communication between the device 400 and other devices. The device 400 may access wireless networks based on a communication standard, such as Wi-Fi, 2G or 3G, or their combination. In an embodiment, the communication component 416 receives broadcast signals or broadcast-related information from an external broadcast management system via a broadcast channel. In an embodiment, the communication component 416 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an embodiment, the device 400 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an embodiment, a non-transitory computer readable storage medium is further provided which includes instructions, such as the memory 404 including instructions. The instructions may be executed by the processor 420 of the device 400 to complete the above methods. For example, the non-transitory computer-readable storage medium may be a ROM, a random-access memory (RAM), a CD-ROM, a magnetic tape, a floppy disk, an optical data storage device, etc.

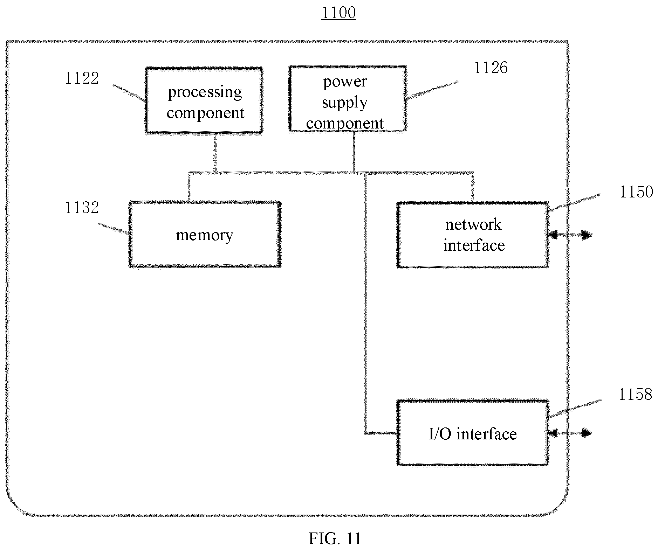

FIG. 11 is a block diagram illustrating a device for uplink coverage enhancement according to an embodiment. For example, the device 1100 may be provided as a server. As illustrated in FIG. 11, the device 1100 includes a processing component 1122, which further includes one or more processors, and memory resources represented by a memory 1132, which are configured to store instructions executable by the processing component 1122, and for example, an application. The application stored in the memory 1132 may include one or more modules each of which corresponds to a set of instructions. In addition, the processing component 1122 is configured to execute instructions, to perform the above method.

The device 1100 may further include one power supply component 1126 configured to execute power management of the device 1100, and one wired or wireless network interface 1150 configured to connect the device 1100 to a network, and one input/output(I/O) interface 1158. The device 1100 may operate an operating system stored in the memory 1132, for example, Windows ServerTM, Mac OS XTM, UnixTM, LinuxTM, FreeB SDTM.

It may be further understood that "a plurality of" in the present disclosure means two or above, which is similar to other quantifiers. The term "and/or", describes the relationship of the association objects, indicating that there may exist three relationships, for example, A and/or B, may represent: any of existing A only, existing both A and B, or existing B only. The character "j" generally means the contextual object is a kind of "or" relationship. The singular forms "a", "the" and "said are also intended to include plural forms, unless the context clearly indicates otherwise.

It should be further understood that the meanings of the terms such as "in response" and "if" mentioned in the disclosure depend on the context and the actual application scenario. For example, the term "in response" used herein can be interpreted as "when" or "upon" or "if" or "in case of .

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure.

**It** should be understood that the present disclosure is not limited to the precise structure described above and shown in the drawings, and various modifications and changes may be made without departing from its scope. The scope of the present application is only limited by the appended claims.

## Claims

1. An uplink coverage enhancement method, performed by a terminal, comprising:
sending repetition indication information to a network device, wherein the repetition indication information is configured to indicate repetition of uplink control information on a common physical uplink control channel (PUCCH) resource by the terminal;
determining, based on a repetition indication sent by the network device, a number of times to send the uplink control information on the common physical uplink control channel resource; and
sending the uplink control information on the common physical uplink control channel resource according to the determined number of times.

2. The method according to claim 1, wherein the repetition indication information comprises at least one of:
a repetition capability, wherein the repetition capability is configured to indicate a capability of the terminal to support uplink control information repetition on the common physical uplink control channel resource; or
a repetition request, wherein the repetition request is configured to indicate that the terminal needs to perform uplink control information repetition.

3. The method according to claim 2, wherein the repetition indication information is indicated based on a physical random access channel resource set;
wherein a correspondence between the physical random access channel resource set and the uplink control information repetition is present; or
a correspondence between the physical random access channel resource set and a repetition number of the uplink control information is present.

4. The method according to claim 2, wherein the repetition indication information is indicated based on message3, and the message3 comprises an information field for indicating the repetition indication information;
wherein the information field comprises a single bit; and
the single bit is configured to indicate the repetition indication information and/or a repetition number in a single repetition number group;
or,
the information field comprises a plurality of bits; and
the plurality of bits are configured to indicate a first repetition number, wherein the first repetition number is a repetition number reported by the terminal to the network device;
wherein, the first repetition number is a repetition number supported by the terminal in response to the repetition indication information comprising the repetition capability; or
the first repetition number is a repetition number recommended by the terminal in response to the repetition indication information comprising the repetition request.

5. The method according to any one of claims 1 to 4, wherein the repetition indication comprises a first signaling and/or a second signaling;
in response to the first signaling being configured with repetition number information, the repetition number information comprising an enable repetition number and/or a validity repetition number, and the enable repetition number and/or the validity repetition number comprising a single repetition number, a second repetition number is determined based on the first signaling, the second repetition number is a repetition number of performing the uplink control information repetition by the terminal on the common physical uplink control channel resource;
in response to the first signaling being configured with the repetition number information, the repetition number information comprising a disable repetition number and/or an invalidity repetition number, the number of times to send the uplink control information on the common physical uplink control channel resource is determined as a single transmission based on the first signaling;
in response to the first signaling being configured with the repetition number information, the repetition number information comprising the enable repetition number and/or the validity repetition number, and the enable repetition number and/or the validity repetition number comprising a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
in response to the first signaling not being configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

6. The method according to claim 5, wherein the second signaling comprises at least one of the following information fields:
a first information field, wherein a bit value of the first information field represents an index of a repetition number among a plurality of repetition numbers configured by the first signaling;
a second information field, wherein a bit value of the second information field represents an index of a predefined repetition number; or
a third information field, wherein the third information field represents the repetition number.

7. The method according to claim 5 or 6, wherein the second signaling comprises downlink control signaling (DCI) of a network device scheduling message4, or the second signaling comprises a media access control (MAC) control element (CE) in a physical downlink control channel (PDSCH) carrying message4.

8. The method according to claim 7, wherein, in response to the second signaling comprising the DCI of the network device scheduling message4, at least one information field comprised in the second signaling is an information field corresponding to most significant X bits in a modulation and coding scheme (MCS) field, where X is a positive integer.

9. The method according to any one of claims 5 to 8, wherein the first signaling is a radio resource control (RRC) signaling.

10. The method according to claim 1, wherein, before sending the repetition indication information to the network device, the method further comprises:
determining that a downlink signal reference signal receiving power measured by the terminal is lower than a downlink signal reference signal receiving power threshold.

11. The method according to claim 1, wherein a condition for sending the uplink control information a single time is determined to be met, the number of times to send the uplink control information on the common physical uplink control channel resource is determined to be a single transmission;
wherein meeting the condition for sending uplink control information in a single time comprises at least one of:
the terminal not supporting the uplink control information repetition;
the terminal not requesting to send the repetition indication information based on a physical random access channel resource set and/or message3;
receiving indication information for indicating a single transmission sent by the network device.

12. The method according to any one of claims 1 to 11, wherein the uplink control information comprises a message4 hybrid automatic repeat request acknowledgement (Msg4 HARQ-ACK) message.

13. An uplink coverage enhancement method, performed by a network device, comprising:
receiving repetition indication information sent by a terminal, wherein the repetition indication information is configured to indicate repetition of uplink control information on a common physical uplink control channel resource by the terminal;
sending a repetition indication to the terminal, wherein the repetition indication is used to instruct the terminal to determine a number of times to send the uplink control information by the terminal on the common physical uplink control channel (PUCCH) resource; and
receiving the uplink control information sent by the terminal on the common physical uplink control channel resource according to the determined number of times.

14. The method according to claim 13, wherein the repetition indication information includes at least one of:
a repetition capability, wherein the repetition capability is configured to indicate a capability of the terminal to support uplink control information repetition on the common physical uplink control channel resource; or
a repetition request, wherein the repetition request is configured to indicate that the terminal needs to perform uplink control information repetition.

15. The method according to claim 14, wherein the repetition indication information is indicated based on a physical random access channel resource set;
wherein a correspondence between the physical random access channel resource set and the uplink control information repetition is present; or
a correspondence between the physical random access channel resource set and a repetition number of the uplink control information is present.

16. The method according to claim 15, wherein the repetition indication information is indicated based on message3, and the message3 comprises an information field for indicating the repetition indication information;
wherein the information field comprises a single bit; and
the single bit is configured to indicate the repetition indication information and/or a repetition number in a single repetition number group;
or,
the information field comprises a plurality of bits; and
the plurality of bits are configured to indicate a first repetition number, wherein the first repetition number is a repetition number received by the network device from the terminal;
wherein the repetition indication information comprises the repetition capability, the first repetition number is a repetition number supported by the terminal; or
the repetition indication information comprises the repetition request, the first repetition number is a repetition number recommended by the terminal.

17. The method according to any one of claims 13 to 16, wherein the repetition indication comprises a first signaling and/or a second signaling;
the first signaling is configured with repetition number information, the repetition number information comprises an enable repetition number and/or a validity repetition number, and the enable repetition number and/or the validity repetition number comprise a single repetition number, a second repetition number is determined based on the first signaling, the second repetition number is a repetition number of performing the uplink control information repetition by the terminal on the common physical uplink control channel resource;
the first signaling is configured with the repetition number information, the repetition number information comprises a disable repetition number and/or an invalidity repetition number, the number of times to send the uplink control information on the common physical uplink control channel resource is determined to be a single transmission based on the first signaling;
the first signaling is configured with the repetition number information, the repetition number information comprises the enable repetition number and/or the validity repetition number, and the enable repetition number and/or the validity repetition number comprise a plurality of repetition numbers, a second repetition number is determined based on the first signaling and the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number; or
the first signaling is not configured with the repetition number information, a second repetition number is determined based on the second signaling, the second repetition number is a repetition number of performing the uplink control information repetition by the terminal on the common physical uplink control channel resource, the second signaling is configured to indicate an index of one repetition number among the plurality of repetition numbers, or the second signaling is configured to indicate one repetition number.

18. The method according to claim 17, wherein the second signaling comprises at least one of the following information fields:
a first information field, wherein a bit value of the first information field represents an index of a repetition number among a plurality of repetition numbers configured by the first signaling;
a second information field, wherein a bit value of the second information field represents an index of a predefined repetition number; or
a third information field, wherein the third information field represents the repetition number.

19. The method according to claim 17 or 18, wherein the second signaling comprises downlink control signaling (DCI) of a network device scheduling message4, or the second signaling comprises a media access control (MAC) control element (CE) in a physical downlink control channel (PDSCH) carrying message4.

20. The method according to claim 19, wherein the second signaling comprises the DCI of the network device scheduling message4, at least one information field comprised in the second signaling is an information field corresponding to most significant X bits in a modulation and coding scheme (MCS) field, where X is a positive integer.

21. The method according to any one of claims 18-20, wherein the first signaling is a radio resource control (RRC) signaling.

22. The method according to claim 13, wherein, before receiving the repetition indication information sent by the terminal, the method further comprises:
determining that a downlink signal reference signal receiving power measured by the terminal is lower than a downlink signal reference signal receiving power threshold.

23. The method according to claim 13, wherein a condition for sending the uplink control information a single time is determined to be met, the number of times to send the uplink control information on the common physical uplink control channel resource is determined to be a single transmission;
wherein meeting the condition for sending uplink control information in a single time comprises at least one of:
the terminal not supporting the uplink control information repetition;
the terminal not requesting to send the repetition indication information based on a physical random access channel resource set and/or message3;
the network device sending indication information for indicating a single transmission.

24. The method according to any one of claims 13 to 23, wherein the uplink control information comprises a message4 hybrid automatic repeat request acknowledgement (Msg4 HARQ-ACK) message.

25. An uplink coverage enhancement apparatus, configured for a terminal, comprising:
a sending unit, configured to send repetition indication information to a network device, wherein the repetition indication information is configured to indicate repetition of uplink control information on a common physical uplink control channel (PUCCH) resource by the terminal; and
an indication unit, configured to determine, based on a repetition indication sent by the network device, a number of times to send the uplink control information on the common physical uplink control channel resource;
the indicating unit being further configured to send the uplink control information on the common physical uplink control channel resource according to the determined number of times.

26. An uplink coverage enhancement apparatus, configured for a network device, comprising:
a receiving unit, configured to receive repetition indication information sent by a terminal, wherein the repetition indication information is configured to indicate repetition of uplink control information on a common physical uplink control channel (PUCCH) resource by the terminal; and
a control unit, configured to send a repetition indication to the terminal, wherein the repetition indication is used to instruct the terminal to determine a number of times to send the uplink control information by the terminal on the common physical uplink control channel resource;
the control unit being further configured to receive the uplink control information sent by the terminal on the common physical uplink control channel resource according to the determined number of times.

27. An uplink coverage enhancement apparatus, comprising:
a processor; and
a memory for storing instructions executable by the processor;
wherein the processor is configured to perform the method of any one of claims 1 to 12 or perform the method of any one of claims 13 to 24.

28. A non-temporary computer-readable storage medium, wherein when instructions in the storage medium are executed by a processor of a terminal, the terminal is caused to perform the method of any one of claims 1 to 12, or when instructions in the storage medium are executed by a processor of a network device, the network device is caused to perform the method of any one of claims 13 to 24.
